# EUROPEAN PATENT SPECIFICATION

(11) **EP 1 976 752 B1**
(45) Date of publication and mention of the grant of the patent: **16.12.2009**
(21) Application number: 06806245.4
(22) Date of filing: 13.10.2006
(51) Int. Cl.: B64C 1/18

(54) **EXTENDED DECOMPRESSION FLAP ARRANGEMENT**
ERWEITERTE DEKOMPRESSIONSKLAPPENANORDNUNG
ENSEMBLE VOLET DE DECOMPRESSION ESCAMOTABLE

(30) Priority: 29.12.2005 DE 102005063076
(43) Date of publication of application: 08.10.2008
(73) Proprietor: Airbus Deutschland GmbH, 21129 Hamburg (DE)
(72) Inventor: LEYENS, Raul, 27321 Emtinghausen (DE)
(74) Representative: Eisenführ, Speiser & Partner
(86) International application number: PCT/EP2006/009892
(87) International publication number: WO 2007/073787

(56) References cited:
- GB-A- 2 072 116
- US-A- 5 118 053
- US-E- R E32 554

## Description

The invention concerns an apparatus for producing a rapid air pressure equalisation between regions of an aircraft fuselage which are separated from each other by an aircraft fuselage structure and which have an air pressure difference relative to each other, comprising at least one through-flow opening in the aircraft fuselage structure, a decompression flap which at least partially closes the through-flow opening, and an unlocking mechanism which when a critical air pressure difference is exceeded unlocks the decompression flap from its closed position so that the decompression flap can be moved into an open position in which the through-flow opening is substantially opened. The invention further concerns an aircraft, in particular a passenger aircraft, comprising an apparatus of the above-indicated kind.

The fuselage cross-section of a common passenger aircraft is usually sub-divided into a plurality of regions, in particular into a passenger cabin, a freight compartment, a roof region (referred to as the "crown area"), a bilge and what are referred to as "triangular regions" between the passenger cabin, the freight compartment and the outer skin. When flying at relatively great heights, for example between 10 and 12 kilometres high, it is necessary for the interior of the aircraft fuselage to be climate-controlled by virtue of the adverse ambient conditions, involving a low temperature of for example -50°C and a relatively low air pressure of for example 250 mbars. That includes both pressurising the fuselage to an equivalent height ("cabin height") of about 3000 m (about 800 mbars) and heating it to a pleasant temperature. For that purpose air is taken from compressor stages of the engines and introduced into the passenger cabin after having been appropriately prepared. As a counterpart consumed air is withdrawn from the cabin and added to a part of the fresh air or removed from the aircraft fuselage through what are referred to as "outflow valves" on the underside of the fuselage. The regulated inward flow of fresh air and outward flow of consumed air provides that the cabin pressure is maintained at a constant level which at great flights differs by 500 mbars or more from the ambient pressure of the aircraft fuselage. If damage occurs in the pressurised outer skin of the aircraft, resulting in an opening to the ambient atmosphere around the aircraft, the aircraft cabin suffers from decompression which in particular affects the region immediately behind the opening. The relatively high difference in pressure relative to ambient atmosphere around the aircraft means that air issues from the region of the cabin which is affected, in order to compensate for the pressure difference. By virtue of the above-indicated subdivision of the interior of fuselage into a plurality of mutually separate regions, as a consequence thereof pressure differences occur between the region of the cabin which has very rapidly decompressed and the adjacent regions which are decompressing more slowly. Those pressure differences act directly on the boundary surfaces between the adjacent regions. In the case of a decompressed freight compartment the cabin floor would heavily stressed due to the pressure difference occurring. Thus on 3rd March 1974 a McDonnell Douglas DC10, while climbing to cruising height, suffered a fatal damage incident which is to be attributed to a freight compartment door which was not correctly closed. Due to the steady climb to cruising height that door was exposed to a steadily increasing force which is to be attributed to the pressure difference between the cabin and the ambient atmosphere outside the aircraft. At a given height the freight compartment door could no longer withstand the pressure stress and opened outwardly of its own accord so that the air pressure of the freight compartment was matched to the level of the ambient atmosphere outside the aircraft fuselage due to an outward flow of air, which resulted in a relatively high pressure difference between the freight compartment and the passenger cabin. As the flow cross-sections between the passenger cabin and the freight compartment were not sufficient for rapid equalisation of the pressure difference in the aircraft involved, the floor of the passenger cabin was excessively heavily stressed and ultimately gave way at its weakest point. As some vital hydraulic and electric lines were laid along the cabin floor, and those lines broke or jammed due to the floor buckling, after just a short time after opening of the freight compartment door the entire aircraft was no longer controllable and ultimately crashed.

For that reason so-called decompression flaps are used between the passenger cabin and the freight compartment or the triangular region, which flaps open in the event of a rapid drop in air pressure in the freight compartment and thereby permit the air pressure in the passenger cabin to be quickly reduced. As a result the floor of the cabin is stressed only for a short time and to a reduced degree and as a result retains integrity.

The decompression flaps, also referred to as "dado panels" ("dado" means as much as base region) are usually arranged in the proximity of the outer edge of the cabin floor from which they extend inclinedly at a given angle a short distance upwardly towards the outer skin. They can rotate about a hinge at their upper end and possibly open a relatively large opening in the subjacent region of the fuselage cross-section. In the closed condition the dado panels are at a certain vertical spacing from the passenger cabin floor and a horizontal spacing from the cabin side trim cladding or lining.

Current decompression flaps, such as the one disclosed by US-RE-32554E, which shows all the features of the preamble of independent claims 1 and 6, are connected to a closure plate which with the decompression flap forms an air passage for the consumed cabin air in lower fuselage regions. If now a predetermined air pressure difference between the passenger cabin and the lower fuselage regions is exceeded, the closure plate is deformed in the direction of the lower pressure and in that way releases a locking means which holds the decompression flap in its position. After unlocking of the decompression flap has occurred it moves towards the outer skin due to the suction effect and opens a large through-flow opening. In that way the air escapes from the passenger cabin in the direction of the lower pressure.

A disadvantage of current decompression flaps is the reduction in the available cabin floor area as the decompression flaps project from the cabin side cladding in the direction of the passenger cabin. That means that it is necessary for the outermost seat rail on which passenger seats are fixed to be displaced inwardly to such an extent that trouble-free circulation of the cabin air is possible when the decompression flap is closed.

In the course of the development of new passenger aircraft and the implementation of the greatest possible level of comfort for passengers, it furthermore planned for the cabin side cladding to be moved markedly closer to the outer skin. That results in a markedly narrower flow cross-section for pressure equalisation between the passenger cabin and the underfloor regions.

Therefore the object of the invention is to optimise the decompression flap in such a way that it can maintain a largest possible useable cabin floor area with at the same time a reduced spacing of the cabin side cladding relative to the outer skin of the aircraft, but which upon triggering or release affords an almost identical or larger through-flow area for rapid pressure equalisation purposes. This is accomplished by the features as defined in claims 1 and 6.

In accordance with which a first aspect the object of the invention is attained in that the decompression flap comprises a plurality of portions which are hingedly connected together.

In accordance with a second aspect the object of the invention is attained in that the decompression flap extends at least partially into the floor region of the aircraft cabin.

In accordance with the invention the decompression flap can be of such a configuration that a portion can be integrated into the side cladding and a further portion in the closed condition can be used as part of the floor or another boundary surface. Upon triggering of a main decompression flap the portions are pulled or pivoted in the direction of the outer skin and in turn open a flow cross-section.

In accordance with a development of the invention it is proposed that the unlocking mechanism has a closure plate which is coupled to the decompression flap.

In an advantageous development of the invention a main decompression flap is integrated into the side cladding of an aircraft passenger cabin.

It is also preferred if a decompression flap extension is arranged on the main decompression flap by way of a hinge.

Integration of the decompression flap extension into the floor of the aircraft passenger cabin is also desirable.

Preferably the decompression flap extension is supported in the closed position as part of the floor for receiving footstep loads and the like.

It is advantageous for the main decompression flap in the closed condition to be arranged substantially perpendicularly to the floor.

It is further advantageous if the main decompression flap has ventilation openings for the issue of air from the passenger cabin.

A preferred embodiment of the invention is described with reference to the Figures in which:
- Figure 1: shows a cross-section through the fuselage of a passenger aircraft,
- Figure 2: shows a lateral section of a conventional dado panel,

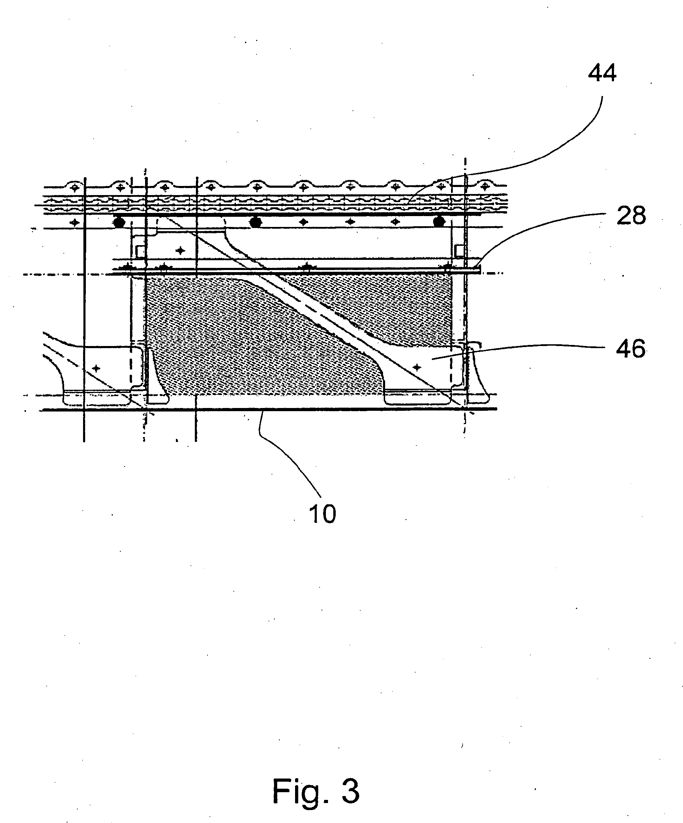

- Figure 3: shows the available through-flow area in current passenger aircraft,
- Figure 4: shows available through-flow areas for future passenger aircraft,
- Figure 5: shows a lateral section of an extended dado panel,
- Figure 6: shows a lateral section of an extended dado panel shortly after a critical air pressure difference has been exceeded,
- Figure 7: shows a lateral section of an extended dado panel after unlocking and during opening,
- Figure 8: shows a lateral section of an extended dado panel in the completely opened condition, and
- Figure 9: shows a comparison of a conventional dado panel and an extended dado panel in the opened condition.

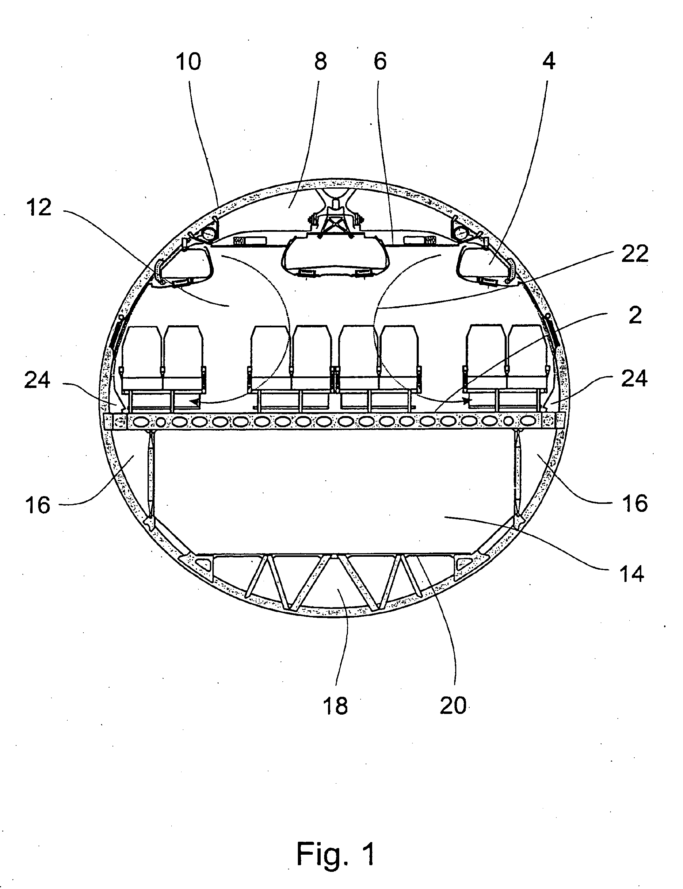

Figure 1 shows the cross-section of an aircraft fuselage and the division thereof into various regions. The horizontal cabin floor 2 is disposed approximately at the mid-height position, thereabove are disposed the baggage compartments 4 (also referred to as hat racks or overhead compartments) and the cabin roof 6. Above the cabin roof 6 is the roof or crown area 8 which is delimited upwardly by the outer skin 10. The cabin 12 is between the cabin floor 2, the cabin roof 6 and the outer skin 10. The freight compartment 14 adjoins same beneath the cabin floor 2. At each of its two sides the freight compartment 14 has a respective so-called triangular region 16 (hereinafter also referred to as the side passage 16) which is used inter alia as a side passage for recycling consumed air from the passenger cabin 12. Each side passage 16 is defined by the cabin floor 2, the freight compartment 14 and the outer skin 10. Disposed at the lower end of the fuselage cross-section beneath the freight compartment 14 is the bilge 18 which is delimited vertically by the freight compartment floor 20 and the outer skin 10.

To clearly show the principle of climate control in the cabin, Figure 1 identifies the air paths of the air flowing through the cabin by dotted arrows 22. The arrows 22 represent the air which flows into the passenger cabin 12 and which flows substantially in vortex form through the cabin, wherein disposed on each side of the cabin is a flow vortex which extends from air outlets in the baggage compartment region by way of the centre of the cabin to the cabin floor 2 in the direction of the dado panels 24. The consumed air is sucked away at a plurality of portions of the fuselage by recirculation fans within the side passage 16, whereby the air moves out of the passenger cabin 12 on each side through the dado panels 24 into the side passage 16.

As described hereinafter the air which flows into the triangular region 16 experiences multiple changes in direction within the dado panel, this resulting in a relatively high flow resistance. That is required in order to produce a sufficiently high pressure difference across the closure plate in the case of rapid decompression. In addition that avoids longitudinal flow of the air within the cabin in the direction of the plurality of recirculation fans. During operation those installation fitments represent the points involving the lowest air pressures and as a result the greatest suction action. That effect can be greatly reduced by using a relatively high air resistance within the dado panels. A certain part of consumed air passes out of the side passage 16 into a mixing chamber and is mixed with fresh cabin air, the remaining part leaves the aircraft through outflow valves on the underside of the fuselage.

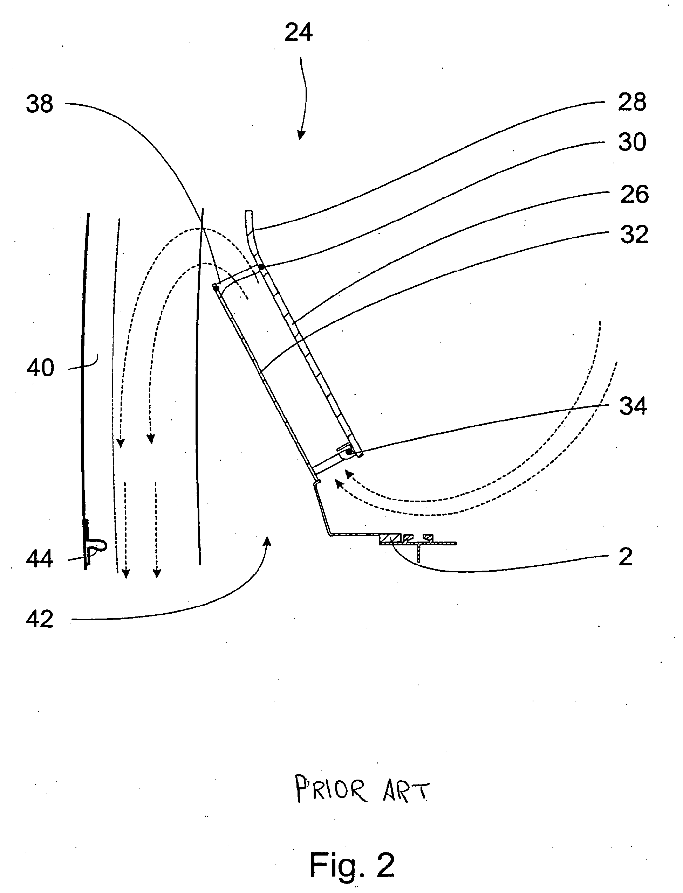

Figure 2 shows a conventional dado panel 24. A decompression flap 26 is integrated flush in a cabin side interior cladding 28 and is connected thereto by way of a hinge 30 arranged at the upper edge. In adjoining relationship in the direction of the outer skin 10 is a closure plate 32 which in the closed condition extends parallel to the decompression flap 26 and holds it in its position by a locking means 34. In addition, disposed on the side of the closure plate opposite to the locking means 34 is a hinge angle 36 which is connected both to the hinge 30 between the decompression flap 26 and the cabin side cladding 28 and a further hinge 38 arranged at the end of the closure plate, which is remote from the locking element 34. In addition, disposed between the closure plate 32 and the fuselage outer skin 10 is the primary insulation 40 of the aircraft fuselage and an entry region 42 through which the cabin air passes into the side passage 16. A dado panel which pivots in relative to the fuselage outer skin 10 would now permit the cabin air to flow into the entry region 42 and the side passage 16. The flow resistance which should be as low possible in the case of rapid pressure equalisation depends on the maximum available through-flow area. Usually that through-flow area is defined by the spacing of the cabin side cladding 28 relative to the fuselage outer skin 10 or the primary insulation 40 or in addition in relation to a stringer 44. That through-flow area is frequently also referred to as a bottle neck.

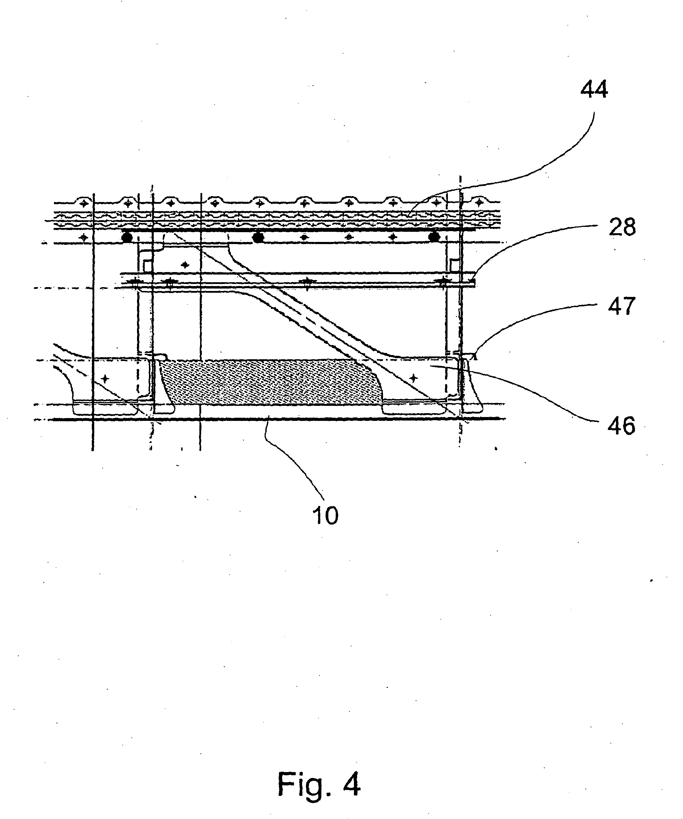

Figure 4 represents a typical through-flow area between the fuselage outer skin 10 and the cabin side cladding 28. In the intermediate space between the cabin side cladding 28 and the outer skin 10 it is delimited by a bracing element 46 (also referred to as the "X-paddle") which fixes the seat rail 44 with respect to the stringer. The bottle neck for the air issuing from the cabin 12 is shown by hatching in Figure 4.

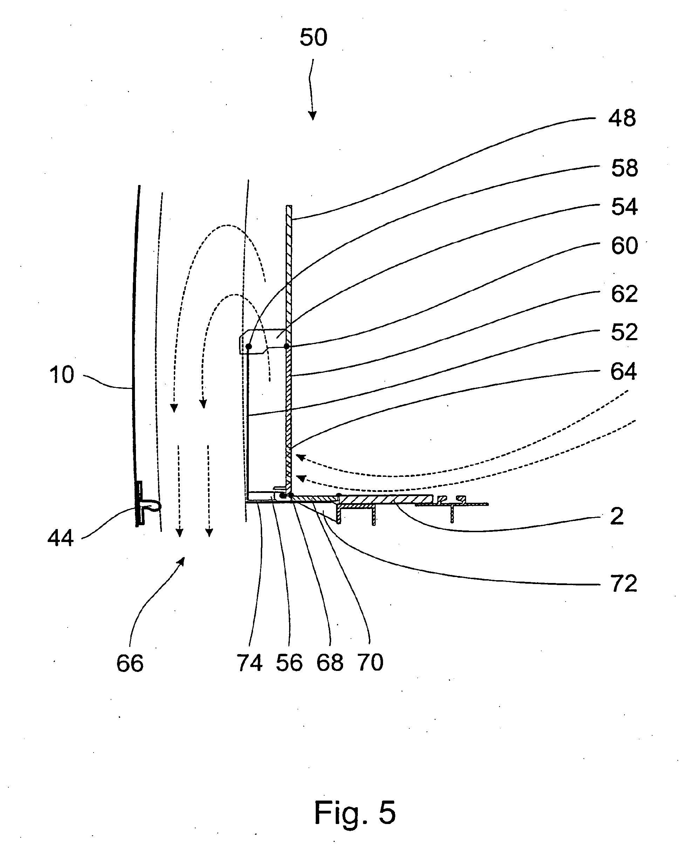

In the course of new aircraft developments it is preferred for the dado panel 24 no longer to be caused to project at an angle from the cabin side cladding 28 into the cabin 12 as shown in Figure 2, but to provide a cabin side cladding which extends as continuously as possible without space restriction by virtue of a dado panel. In addition the spacing of the cabin side cladding 28 from the fuselage outer skin 10 is reduced. That results in a substantially reduced through-flow area, that is to say a narrower bottle neck. Figure 4 shows how the through-flow area is reduced in the case of a cabin side cladding 28 which is moved towards the outer skin 10. The original position of the cabin side cladding 28 moves back to a new cabin side cladding 47. That reduces the through-flow area in the example shown in Figure 5 by more than half.

Figure 5 shows a dado panel 50 according to the invention. The cabin side cladding extends substantially perpendicularly to the cabin floor 2, and the dado panel 50 does not project at an angle from the cabin side cladding into the interior of the cabin 12. The dado panel 50 according to the invention has a conventional main decompression flap 62, a closure plate 52, a bracing element 54, a locking element 56, a flow barrier 74 and two hinges 58 and 60, wherein the hinge 58 is arranged between the closure plate 52 and the bracing element 54 and the hinge 60 is between a dado panel frame 48 and a main decompression flap 62 which adjoins the dado panel frame 48 in the direction of the cabin floor 2. Disposed at the lower end of the main decompression flap 62 are a plurality of air openings 64 which here by way of example are directed upwardly in the direction of the outer skin 10. The plate of the flow barrier 74 is fixedly connected to the decompression flap extension 70. When the dado panel 50 is closed consumed cabin air would pass through those upwardly facing openings 64 between the main decompression flap 62 and the closure plate 52 and there, as the flow path is blocked downwardly by the plate portion of the flow barrier 74, it would flow in the direction of the bracing element 54 where the flow direction of the air is then deflected through above 180° so that the air flows into the side passage 16 to the recirculation fans.

The connecting passageway 66 to the side passage 16 is here of a substantially smaller area than the entry passageway 42 in Figure 2 as the spacing between the closure plate 52 and the stringer 44 is less. The dado panel 50 according to the invention provides an increase in the through-flow area to the side panel 16. At its lower end the main decompression flap 62 has a further hinge 68 at which a decompression flap extension 70 is arranged. In the closed condition that decompression flap extension 70 extends substantially perpendicularly to the main decompression flap 62 and parallel to the cabin floor 2. When the main decompression flap 62 opens the decompression flap extension 70 is entrained and opens a through-flow cross-section in the floor 2, which enlarges the total through-flow opening and thus the bottle neck.

When the dado panel 50 is closed the decompression flap extension 70 serves as part of the cabin floor 2 and as a result is subjected to any stresses and loadings due to people walking thereon or the like. For that reason it is essential for the decompression flap extension to be supported downwardly, and that is implemented by a flap support structure 72.

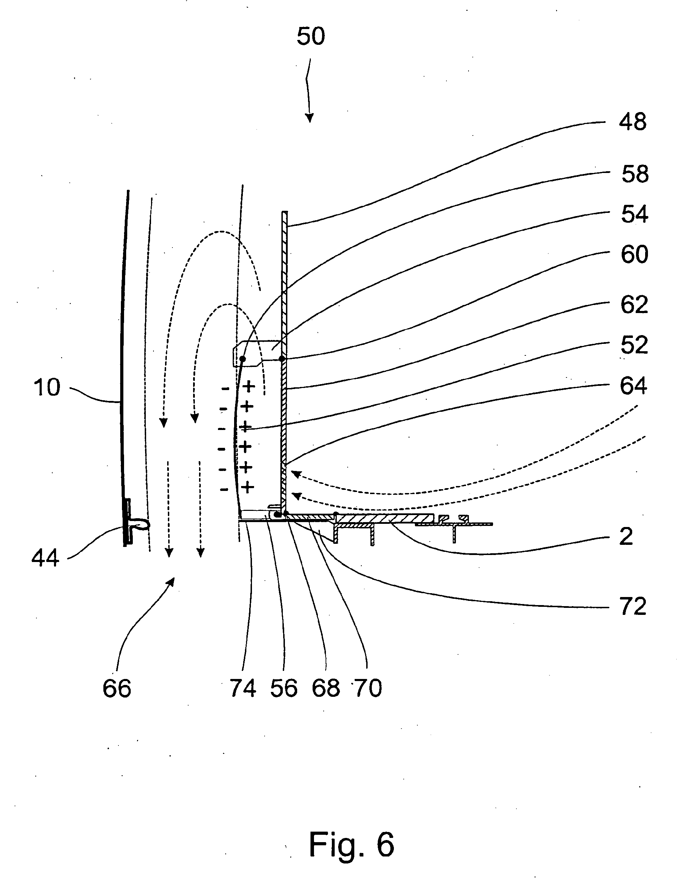

Figure 6 shows a dado panel 50 according to the invention immediately after a critical air pressure difference is exceeded and immediately after the commencement of unlocking. In the event of a rapid drop in air pressure for example in the freight compartment 14 there is pressure difference between the passenger cabin 12 and the freight compartment 14 so that the air from the passenger cabin 12 tries to flow to the point at lowest pressure. The air from the cabin 12 passes through the openings 64 of the main decompression flap 62 between the main decompression flap 62 and the closure plate 52, whereupon when a given pressure difference is reached the closure plate 52 buckles out in the direction of the outer skin 10. That causes the locking element 56 to be loosened and it opens. As a result the closure plate 52 separates from the main decompression flap 62.

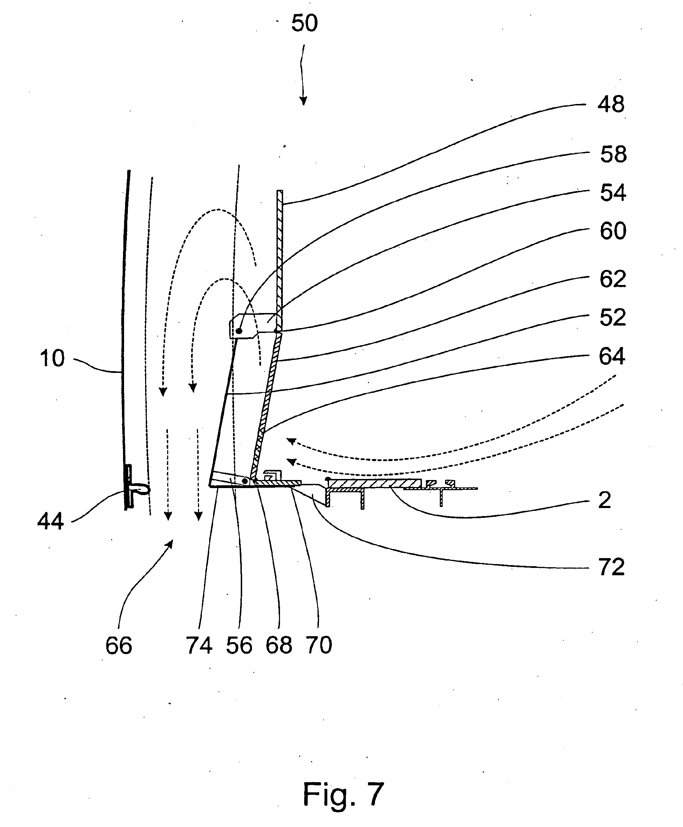

Figure 7 shows how the closure plate 52, the main decompression flap 62 and the decompression flap extension 70 move in the direction of the outer skin 10. The decompression flap extension is firstly pulled by the main decompression flap 62 substantially parallel to the cabin floor 2 towards the outer skin 10. The plate portion of the flow barrier 74, which at the underside of the decompression flap extension 70, follows the parallel displacement. After the decompression flap extension 70 has left the region of the flap support structure 72 by virtue of the pure translatory movement, it can be transformed into a rotary movement. The flow barrier 74 follows that movement, by virtue of its fixed connection.

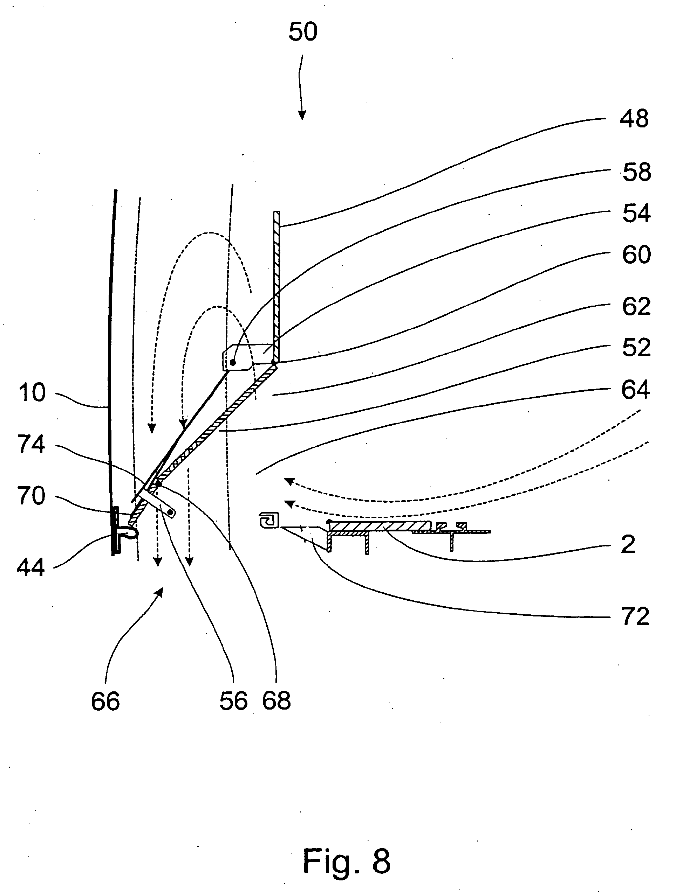

Figure 8 shows a dado panel in the completely opened condition. The closure plate 52 is rotated completely in the direction of the outer skin 10 and bears against the primary insulation 40. The main decompression flap 62, the decompression flap extension 70 and the closure plate 74 bear jointly against the closure plate 52 and in that way open a maximum through-flow opening for the air issuing from the cabin. The spacing between the stringer 44 and the end of the cabin floor 2, which is towards the outer skin 10 substantially corresponds to the spacing between the lower end of the dado panel 24 in Figure 2 and the stringer 44 and therefore the through-flow area available is substantially identical. At the same time however less space is occupied within the cabin.

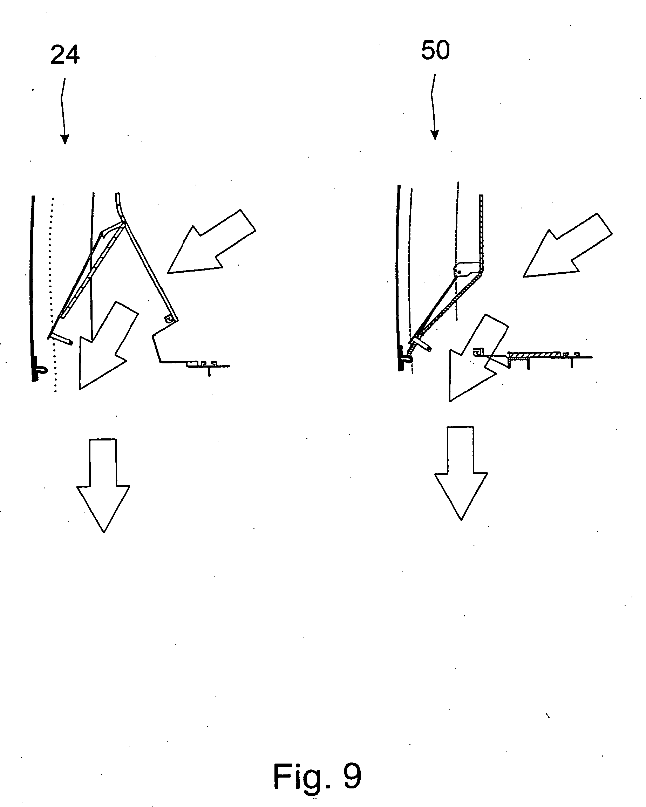

Figure 9 shows a comparative section view of a conventional dado panel and a dado panel according to the invention in order to clearly show the principle according to the invention.

## Claims

1. An apparatus for producing a rapid air pressure equalization between regions of an aircraft fuselage which are separated from each other by an aircraft fuselage structure and which have an air pressure difference relative to each other, comprising
- at least one through-flow opening in the aircraft fuselage structure,
- a decompression flap (50) by which the through-flow opening can be at least partially closed and
- an unlocking mechanism which when a critical air pressure difference is exceeded unlocks the decompression flap (50) from a closed position so that the decompression flap (50) can be moved into an open position in which the through-flow opening is substantially opened,
wherein
- the decompression flap (50) has a main decompression flap (62) and a decompression flap extension (70),
- the main decompression flap (62) is adapted to be held in articulated manner in the region of a cabin side cladding above a floor (2) located in the aircraft fuselage and extends to the floor in the closed position and
- the decompression flap extension (70) is held in articulated manner on the end of the main decompression flap (62) facing the floor (2),
wherein in the closed position, the decompression flap extension (70) is adapted to extend away from the cabin side cladding (28) in the same plane as the floor (2),
- the decompression flap extension (70) is adapted to form part of the floor (2),
**characterized in that** the decompression flap extension (70) is supported in the closed position by a flap support structure (72), as part of the floor (2), for receiving footstep loads and the like.

2. Apparatus according to claim 1, **characterized in that** the unlocking mechanism has a closure plate (32) which is coupled to the decompression flap (50).

3. Apparatus according to one of claims 1 and 2, **characterized in that** a main decompression flap (62) is integrated into the side cladding of an aircraft passenger cabin (12) and/or into its own frame.

4. Apparatus according to one of the preceding claims, **characterized in that** the main decompression flap (62) in the closed condition is arranged substantially perpendicularly to the floor (2).

5. Apparatus according to one of the preceding claims **characterized in that** the main decompression flap (62) has ventilation openings for the issue of air from the passenger cabin (12).

6. An aircraft, in particular a passenger aircraft, comprising an aircraft fuselage and an apparatus for producing a rapid air pressure equalisation between regions of an aircraft fuselage which are separated from each other by an aircraft fuselage structure and which have an air pressure difference relative to each other, comprising
- at least one through-flow opening in the aircraft fuselage structure,
- a decompression flap (50) by which the through-flow opening can be at least partially closed and
- an unlocking mechanism which when a critical air pressure difference is exceeded unlocks the decompression flap (50) from a closed position so that the decompression flap (50) can be moved into an open position in which the through-flow opening is substantially opened,
wherein
- the decompression flap (50) has a main decompression flap (62) and a decompression flap extension (70),
- the main decompression flap (62) is held in articulated manner in the region of a cabin side cladding (28) above a floor (2) located in the aircraft fuselage and extends to the floor in the closed position and
- the decompression flap extension (70) is held in articulated manner on the end of the main decompression flap (62) facing the floor (2),
wherein in the closed position, the decompression flap extension (70) extends away from the cabin side cladding (28) in the same plane as the floor (2),
- the decompression flap extension (70) forms part of the floor (2), and **characterized in that**
the decompression flap extension (70) is supported in the closed position by a flap support structure (72) as part of the floor (2) for receiving footstep loads and the like.

7. Apparatus according claim 6,
**characterized in that** the cabin side cladding (28) extends perpendicularly to the cabin floor (2).

## Patentansprüche

1. Vorrichtung zum Herstellen eines raschen Luftdruckausgleichs zwischen voneinander durch eine Flugzeugrumpfstruktur abgetrennten und eine Luftdruckdifferenz zueinander aufweisenden Bereichen eines Flugzeugrumpfs, mit
- mindestens einer Durchströmöffnung in der Flugzeugrumpfstruktur,
- einer Dekompressionsklappe (50), mit der die Durchströmöffnung wenigstens teilweise verschließbar ist, und
- einem Entriegelungsmechanismus, der bei Überschreiten einer kritischen Luftdruckdifferenz die Dekompressionsklappe (50) aus einer Schließstellung entriegelt, so dass die Dekompressionsklappe (50) in eine Öffnungsstellung bewegt werden kann, in der die Durchströmöffnung im Wesentlichen geöffnet ist,
wobei
- die Dekompressionsklappe (50) eine Hauptdekompressionsklappe (62) und eine Dekompressionsklappenerweiterung (70) aufweist,
- die Hauptdekompressionsklappe (62) so ausgeführt ist, dass sie oberhalb eines im Flugzeugrumpf befindlichen Fußbodens (2) gelenkig im Bereich einer Kabinenseitenverkleidung gelagert ist und sich in der Schließstellung bis zum Fußboden erstreckt, und
- die Dekompressionsklappenerweiterung (70) gelenkig am zum Fußboden (2) hin gerichteten Ende der Hauptdekompressionsklappe (62) gelagert ist,
wobei die Dekompressionsklappenerweiterung (70) so ausgeführt ist, dass sie sich in der Schließstellung in der gleichen Ebene wie der Fußboden (2) von der Kabinenseitenverkleidung (28) weg erstreckt, und
die Dekompressionsklappenervvaiterung (70) so ausgeführt ist, dass sie einen Teil des Fußbodens (2) bildet,
**dadurch gekennzeichnet, dass**
die Dekompressionsklappenerweiterung (70) in geschlossener Position als Teil des Fußbodens (2) zur Aufnahme von Tretlasten und dgl. mittels einer Klappenstützstruktur (72) abgestützt wird.

2. Vorrichtung nach Anspruch 1,
**dadurch gekennzeichnet, dass** der Entriegelungsmechanismus eine Verschlussplatte (32) aufweist, welche mit der Dekompressionsklappe (50) gekoppelt ist.

3. Vorrichtung nach einem der Ansprüche 1 und 2,
**dadurch gekennzeichnet, dass** eine Hauptdekompressionsklappe (62) in der Seitenverkleidung einer Flugzeugpassagierkabine (12) und/oder in einen eigenen Rahmen integriert ist.

4. Vorrichtung gemäß einem der vorangehenden Ansprüche,
**dadurch gekennzeichnet, dass** die Hauptdekompressionsklappe (62) im geschlossenen Zustand im Wesentlichen senkrecht zum Fußboden (2) angeordnet ist.

5. Vorrichtung gemäß einem der vorhergehenden Ansprüche,
**dadurch gekennzeichnet, dass** die Hauptdekompressionsklappe (62) Ventilationsöffnungen zum Austreten von Luft aus der Passagierkabine (12) aufweist.

6. Flugzeug, insbesondere Passagierflugzeug,
mit einem Flugzeugrumpf und einer Vorrichtung zum Herstellen eines raschen Luftdruckausgleichs zwischen voneinander durch eine Flugzeugrumpfstruktur abgetrennten und eine Luftdruckdifferenz zueinander aufweisenden Bereichen eines Flugzeugrumpfs, mit
- mindestens einer Durchströmöffnung in der Flugzeugrumpfstruktur,
- einer Dekompressionsklappe (50), mit der die Durchströmöffnung wenigstens teilweise verschließbar ist, und
- einem Entriegelungsmechanismus, der bei Überschreiten einer kritischen Luftdruckdifferenz die Dekompressionsklappe (50) aus einer Schließstellung entriegelt, so dass die Dekompressionsklappe (50) in eine Öffnungsstellung bewegt werden kann, in der die Durchströmöffnung im Wesentlichen geöffnet ist,
wobei
- die Dekompressionsklappe (50) eine Hauptdekompressionsklappe (62) und eine Dekompressionsklappenerweiterung (70) aufweist,
- die Hauptdekompressionsklappe (62) oberhalb eines im Flugzeugrumpf befindlichen Fußbodens (2) gelenkig im Bereich einer Kabinenseitenverkleidung (28) gelagert ist und sich in der Schließstellung bis zum Fußboden erstreckt, und
- die Dekompressionsklappenerweiterung (70) gelenkig am zum Fußbodens (2) hin gerichteten Ende der Hauptdekompressionsklappe (62) gelagert ist,
wobei in der Schließstellung sich die Dekompressionsklappenerweiterung (70) in der gleichen Ebene wie der Fußboden (2) von der Kabinenseitenverkleidung (28) weg erstreckt, und
die Dekompressionsklappenerweiterung (70) einen Teil des Fußbodens (2) bildet,
**dadurch gekennzeichnet, dass**
die Dekompressionsklappenerweiterung (70) in geschlossener Position als Teil des Fußbodens (2) zur Aufnahme von Tretlasten und dgl. mittels einer Klappenstützstruktur (72) abgestützt wird.

7. Vorrichtung nach Anspruch 6,
**dadurch gekennzeichnet, dass** die Seitenverkleidung senkrecht zum Kabinenfußboden (2) verläuft.

## Revendications

1. Appareil pour produire une égalisation rapide de pression d'air entre des régions d'un fuselage d'aéronef qui sont séparées l'une de l'autre par une structure de fuselage d'aéronef et qui présentent une différence de pression d'air l'une par rapport à l'autre, comprenant
- au moins une ouverture de passage dans la structure de fuselage d'aéronef,
- un volet de décompression (50) par lequel l'ouverture de passage peut être au moins partiellement fermée et
- un mécanisme de déverrouillage qui, lorsqu'une différence critique de pression d'air est dépassée, déverrouille le volet de décompression (50) à partir d'une position fermée de sorte que le volet de décompression (50) puisse être déplacé dans une position ouverte dans laquelle l'ouverture de passage est sensiblement ouverte,
dans lequel
- le volet de décompression (50) comporte un volet de décompression principal (62) et une extension de volet de décompression (70),
- le volet de décompression principal (62) est adapté pour être maintenu de manière articulée dans la région d'un revêtement latéral de cabine au-dessus d'un plancher (2) situé dans le fuselage d'aéronef et s'étend jusqu'au plancher dans la position fermée et
- l'extension de volet de décompression (70) est maintenue de manière articulée sur l'extrémité du volet de décompression principal (62) faisant face au plancher (2),
dans lequel, dans la position fermée, l'extension de volet de décompression (70) est adaptée pour s'écarter du revêtement latéral de cabine (28) dans le même plan que le plancher (2),
- l'extension de volet de décompression (70) est adaptée pour former une partie du plancher (2),
**caractérisé en ce que** l'extension de volet de décompression (70) est supportée dans la position fermée par une structure de support de volet (72), en faisant partie du plancher (2), pour recevoir des pressions de pas et analogues.

2. Appareil selon la revendication 1, **caractérisé en ce que** le mécanisme de déverrouillage comporte une plaque de fermeture (32) qui est couplée au volet de décompression (50).

3. Appareil selon une des revendications 1 et 2, **caractérisé en ce qu'**un volet de décompression principal (62) est intégré dans le revêtement latéral d'une cabine de passagers d'aéronef (12) et/ou dans son propre cadre.

4. Appareil selon une des revendications précédentes, **caractérisé en ce que** le volet de décompression principal (62) dans la condition fermée est disposé sensiblement perpendiculairement au plancher (2).

5. Appareil selon une des revendications précédentes **caractérisé en ce que** le volet de décompression principal (62) comporte des ouvertures de ventilation pour la sortie d'air à partir de la cabine de passagers (12).

6. Aéronef, en particulier un aéronef pour le transport de passagers, comprenant un fuselage d'aéronef et un appareil pour produire une égalisation rapide de pression d'air entre des régions d'un fuselage d'aéronef qui sont séparées l'une de l'autre par une structure de fuselage d'aéronef et qui possèdent une différence de pression d'air l'une par rapport à l'autre, comprenant
- au moins une ouverture de passage dans la structure de fuselage d'aéronef,
- un volet de décompression (50) par lequel l'ouverture de passage peut être au moins partiellement fermée et
- un mécanisme de déverrouillage qui, lorsqu'une différence critique de pression d'air est dépassée, déverrouille le volet de décompression (50) à partir d'une position fermée de sorte que le volet de décompression (50) puisse être déplacé dans une position ouverte dans laquelle l'ouverture de passage est sensiblement ouverte,
dans lequel
- le volet de décompression (50) comporte un volet de décompression principal (62) et une extension de volet de décompression (70),
- le volet de décompression principal (62) est maintenu de manière articulée dans la région d'un revêtement latéral de cabine (28) au-dessus d'un plancher (2) situé dans le fuselage d'aéronef et s'étend jusqu'au plancher dans la position fermée et
- l'extension de volet de décompression (70) est maintenue de manière articulée sur l'extrémité du volet de décompression principal (62) faisant face au plancher (2),
dans lequel, dans la position fermée, l'extension de volet de décompression (70) s'écarte du revêtement latéral de cabine (28) dans le même plan que le plancher (2),
- l'extension de volet de décompression (70) fait partie du plancher (2), et **caractérisé en ce que**
l'extension de volet de décompression (70) est supportée dans la position fermée par une structure de support de volet (72) faisant partie du plancher (2) pour recevoir des pressions de pas et analogues.

7. Appareil selon la revendication 6,
**caractérisé en ce que** le revêtement latéral de cabine (28) s'étend perpendiculairement au plancher de cabine (2).
